# EUROPÄISCHE PATENTSCHRIFT

(11) **EP 2 336 700 B1**
(45) Veröffentlichungstag und Bekanntmachung des Hinweises auf die Patenterteilung: **30.12.2020**
(21) Anmeldenummer: 10190640.2
(22) Anmeldetag: 10.11.2010
(51) Int. Cl.: F28D 20/00, F28F 27/00, D21F 5/20

(54) **Speichervorrichtung und Verfahren zu deren Betrieb**
Storage device and method for its operation
Dispositif de stockage et son procédé de fonctionnement

(30) Priorität: 08.12.2009 DE 102009057417
(43) Veröffentlichungstag der Anmeldung: 22.06.2011
(73) Patentinhaber: Siemens Aktiengesellschaft, 80333 München (DE)
(72) Erfinder: Schwarz, Hermann, 97084 Würzburg (DE); Schäfer, Jochen, 90402 Nürnberg (DE)

(56) Entgegenhaltungen:
- WO-A2-2009/013781
- DE-A1- 2 831 017
- DE-A1- 10 000 861
- DE-A1- 19 707 859
- DE-U1-202009 000 409

## Beschreibung

Speichervorrichtung und Verfahren zu deren Betrieb Die Erfindung betrifft eine Speichervorrichtung zur temporären Speicherung von Wärmeenergie, umfassend ein wärmeisoliertes Speichergefäß zur Aufnahme eines Speichermediums und mindestens eine im Speichergefäß angeordnete, mittels mindestens eines Wärmetauschermediums durchströmbare Wärmetauschereinheit. Die Erfindung betrifft weiterhin ein Verfahren zum Betreiben einer derartigen Speichervorrichtung.

Der fortschreitende Klimawandel und die Endlichkeit fossiler Energieträger führen derzeit zu einer Intensivierung der Suche nach Möglichkeiten und Maßnahmen, den Primärenergieverbrauch besonders energieintensiver Produktionsprozesse zu senken. So ist beispielsweise die Herstellung von Papier mit einem hohen Einsatz an Primärenergie und Wasser verbunden.

DE 2831017 A1 offenbart eine Speichervorrichtung gemäß dem Oberbegriff von Anspruch 1.

Speichervorrichtungen der eingangs genannten Art sind bereits aus der DE 10 2008 001 308 B3 bekannt. Hier ist ein Speichertank zur Speicherung von gegenüber der Umgebungstemperatur erhitzten Fluiden unterschiedlicher Temperatur beschrieben. Bereits zu einem früheren Zeitpunkt in den Speichertank eingebrachte Fluide liegen in diesem in einer thermischen Schichtung vor, wobei ausgehend von einem unteren Bereich in Richtung eines oberen Bereichs des Speichertanks eine Schichtung von kaltem zu heißem Fluid vorliegt. Ein in den Speichertank einzubringendes Fluid wird je nach Temperatur über in unterschiedlichen Höhenlagen am Speichertank vorgesehene Zu- und Abläufe in einen gleich oder ähnlich temperierten Schichtungsbereich in den Speichertank eingebracht, damit die thermische Schichtung erhalten und möglichst wenig beeinflusst wird.

Im Inneren des Speichertanks gemäß der DE 10 2008 001 308 B3 kann zusätzlich eine Wärmetauschereinheit angeordnet sein, die verwendet wird, um die Wärmeenergie in Fluiden, die nicht wiederverwendet werden sollen oder können, wie beispielsweise kontaminierte Fluide, zu nutzen. Das Fluid dient hier als Wärmetauschermedium, das seine Wärmeenergie auf ein im Speichertank enthaltenes Fluid überträgt, ohne dass ein Kontakt oder eine Mischung zwischen dem Wärmetauschermedium und dem Fluid im Speichertank auftritt.

Eine solche Wärmetauschereinheit kann höhenverstellbar angeordnet sein oder es können alternativ mehrere Wärmetauschereinheiten in verschiedenen Höhenlagen vorgesehen sein. Dies dient dazu, Wärmeenergie von einem Wärmetauschermedium auf ein Fluid ähnlicher Temperatur im Speichertank zu übertragen, so dass die vorhandene thermische Schichtung möglichst wenig gestört wird.

Allerdings bewirkt eine Höhenverstellung einer Wärmetauschereinheit im Speichertank, dass das darin gespeicherte Fluid bewegt und die thermische Schichtung empfindlich gestört wird. Weiterhin ist ein bewegliches Bauteil immer mit einem erhöhtem Wartungsaufwand und Ausfallrisiko verbunden.

Die alternativ dazu genannte Möglichkeit, mehrere Wärmetauscher in unterschiedlichen Höhenlagen des Speichertanks anzuordnen, vermeidet eine Verwirbelung des Fluids im Speichertank. Um die thermische Schichtung möglichst wenig zu stören, muss jedoch eine Übertragung der Wärmeenergie auf ein ähnlich temperiertes Fluid im Speichertank erfolgen. Ist die Temperatur des verwendeten Wärmetauschermediums bekannt und weitgehend konstant, so kann der Wärmetauscher dahingehend optimiert ausgelegt werden Sofern die Temperatur des eingesetzten Wärmetauschermediums aber stark schwankt, kann die im Wärmetauschermedium vorhandene Wärmeenergie aufgrund der konstanten Wärmetauscherfläche nur unzureichend ausgenutzt werden. Eine thermische Schichtung kommt zustande, wenn bei Erwärmung eines flüssigen Speichermediums die Dichte des Speichermediums sinkt. Beispielsweise besitzt oberhalb von 4°C warmes Wasser eine geringere Dichte als kaltes Wasser, wodurch es ein ideales Speichermedium für Wärmeenergie darstellt. Wärmeres Wasser sammelt sich oben in einem Speichergefäß, während kaltes Wasser im unteren Bereich des Speichergefäßes verbleibt. Dieser Zustand ist allerdings labil, da die vorhandenen Dichteunterschiede nur gering sind und ungünstige Strömungsverhältnisse im Speichergefäß zu einer Vermischung von kaltem und warmem Wasser führen können. Das resultierende lauwarme Wasser ist meist nicht unmittelbar verwendbar und muss zusätzlich, beispielsweise über fossile Brennstoffe, erwärmt werden.

Es ist daher Aufgabe der Erfindung, eine Speichervorrichtung bereitzustellen, mit der eine verbesserte Übertragung von Wärmeenergie zwischen einem Wärmetauschermedium und einem in einer thermischen Schichtung vorliegenden Speichermedium ermöglicht wird, sowie ein Verfahren zum Betrieb einer solchen Speichervorrichtung anzugeben.

Die Aufgabe wird durch eine Speichervorrichtung zur temporären Speicherung von Wärmeenergie gemäß Anspruch 1 gelöst.

Die erfindungsgemäße Speichervorrichtung ermöglicht eine erhöhte Übertragung von Wärmeenergie von einem Wärmetauschermedium auf ein in einer thermischen Schichtung vorliegendes oder mit einer thermischen Schichtung zu versehendes Speichermedium, ohne dass dabei die thermische Schichtung beeinträchtigt wird bzw. eine unerwünschte Durchmischung und Verwirbelung des Speichermediums auftritt. Dies wird erreicht, indem die Größe der Wärmetauscherfläche in Anpassung an das jeweilige Wärmetauschermedium und seine Temperatur flexibel ausgewählt und angepasst wird. Dadurch kann mehr Wärmeenergie auf das Speichermedium übertragen und für energieintensive Prozesse wiederverwendet werden, um Primärenergie einzusparen. Die Speichervorrichtung weist dabei eine einfache, robuste und kostengünstige Bauweise ohne bewegliche Bauteile auf, so dass ein Ausfallrisiko und ein Wartungsbedarf minimiert sind.

Die Aufgabe wird für ein Verfahren zum Betreiben einer erfindungsgemäßen Speichervorrichtung gelöst, wobei ein Speichermedium die mindestens eine Wärmetauschereinheit und einen jeden der zweiten Temperaturfühler bedeckend ins Speichergefäß gefüllt wird, indem es folgende Schritte umfasst:
- Bereitstellen eines Wärmetauschermediums mit einer ersten Temperatur T1;
- Erfassen der ersten Temperatur T1 mittels mindestens eines ersten Temperaturfühlers;
- Erfassen einer zweiten Temperatur T2 mittels eines jeden der zweiten Temperaturfühler;
- Auswählen des oder der zweiten Temperaturfühler, an dem/denen ein Betrag der Differenz T1 - T2 minimal ist,
- Einleiten des Wärmetauschermediums in ein, dem ausgewählten zweiten Temperaturfühler aufgrund der gleichen Höhenlage im Speichergefäß zugeordnetes Segment;
- Überführen des Wärmetauschermediums in eine unterschiedliche Höhenlage des Speichergefäßes, wobei Wärmeenergie zwischen dem Wärmetauschermedium und dem Speichermedium übertragen wird, und
- Ausleiten des Wärmetauschermediums aus dem Speichergefäß.

Das erfindungsgemäße Verfahren trägt dazu bei, dass eine thermische Schichtung des Speichermediums im Speichergefäß ausgebildet und auch beibehalten wird. Eine thermische Schichtung ermöglicht eine effiziente Wiederverwendung der gespeicherten Wärmeenergie und trägt zu einer Verminderung des Verbrauchs von Primärenergie bei. Dabei können auch Wärmespeichermedien mit stark schwankenden Temperaturen effektiv genutzt werden, indem die Größe der Wärmetauscherfläche in Anpassung an das jeweilige Wärmetauschermedium und seine Temperatur flexibel ausgewählt und angepasst wird. Dadurch kann mehr Wärmeenergie auf das Speichermedium übertragen und für energieintensive Prozesse wiederverwendet werden, um Primärenergie einzusparen.

Unter einem "Überführen" des Wärmetauschermediums in eine unterschiedliche Höhenlage des Speichergefäßes wird hier ganz allgemein verstanden, dass das Wärmetauschermedium im Speichergefäß nach oben oder nach unten verlagert, geleitet oder verschoben wird, wobei es mit unterschiedlichen Segmenten der Wärmetauschereinheit in Berührung kommt.

Bevorzugte Ausgestaltungen der Speichervorrichtung und des Verfahrens zu deren Betrieb sind nachfolgend erläutert.

Die Höhe eines einzelnen Segments einer Wärmetauschereinheit bzw. dessen Ausdehnung in vertikaler Richtung im Speichergefäß richtet sich dabei vor allem nach der Größe des Speichergefäßes, in dem eine Wärmetauschereinheit betrieben wird. Üblicherweise werden mindestens zwei, vorzugsweise mindestens drei, insbesondere aber mindestens fünf Segmente in einem Speichergefäß vorgesehen. Dabei kann eine Höhe der Segmente gleich oder auch unterschiedlich groß gewählt werden. Über die Anzahl der Segmente wird die Größe der zum Wärmetausch zur Verfügung stehenden Fläche beeinflusst, was bei der energetischen Optimierung der Speichervorrichtung einen zusätzlichen Freiheitsgrad darstellt.

Die Leistung der Speichervorrichtung wird verbessert, wenn die spezifische Oberfläche einer Wärmetauschereinheit bezogen auf das Volumen des Speichergefäßes bevorzugt im Bereich von 1 bis 10 m²/m³ gewählt wird.

Es hat sich bewährt, wenn das Speichergefäß eine senkrecht stehende Längsachse aufweist und ein Schwerpunkt der mindestens einen Wärmetauschereinheit zu der Längsachse zentriert im Speichergefäß angeordnet ist. Dies gewährleistet eine möglichst gleichmäßige und homogene Erwärmung des Speichermediums in den unterschiedlichen Höhenlagen des Speichergefäßes.

Das Speichergefäß weist dabei bevorzugt einen zylindrischen oder rechteckigen Querschnitt auf.

In einer weiteren bevorzugten Ausgestaltung weist das Speichergefäß einen Doppelmantel zur Verbesserung der Wärmeisolierung auf. Alternativ kann der Doppelmantel verwendet werden, um im Spalt zwischen einer inneren und äußeren Mantelfläche des Doppelmantels ein weiteres Wärmetauschermedium hindurchzuleiten und Wärmeenergie auf das Speichermedium oder vom Speichermedium auf das weitere Wärmetauschermedium zu übertragen.

Anstelle eines solchen Doppelmantels kann auch eine Rohr- oder Halbrohrschlange außen an einer einfachen Mantelfläche eines Speichergefäßes angeordnet sein, durch die das weitere Wärmetauschermedium geleitet werden kann, um Wärmeenergie auf das Speichermedium oder vom Speichermedium auf das weitere Wärmetauschermedium zu übertragen.

Die Speichervorrichtung weist in einer bevorzugten Ausgestaltung einen einzelnen Wärmetauscher auf, der mittels der Versorgungsleitungen in Segmente unterteilt ist, so dass eine lediglich partielle, flexible Nutzung bzw. Durchströmung des Wärmetauschers mit einem Wärmetauschermedium möglich ist.

Alternativ dazu kann die Speichervorrichtung mindestens eine Wärmetauschereinheit aufweisen, die pro Segment einen separaten Wärmetauscher umfasst. Die separaten Wärmetauscher sind dabei bevorzugt in unterschiedlichen Höhenlagen des Speichergefäßes angeordnet und strömungstechnisch in Serie geschaltet.

In beiden Fällen, d.h. sowohl bei Verwendung eines oder auch mehrerer Wärmetauscher, ist eine Nutzung von bestimmten, ausgewählten Teilbereichen der Wärmetauschereinheit und somit eine flexible Änderung und Anpassung der eingesetzten Wärmetauscherfläche möglich, so dass ein Wärmetauschermedium entsprechend seiner Temperatur in eine gleich oder ähnlich temperierte Schicht der thermischen Schichtung im Speichergefäß eingespeist werden und zur effizienten, gezielten Erwärmung oder Abkühlung in ein oder mehrere Segmente mit einer anderen Höhenlage überführt werden kann.

Innerhalb eines Segments einer Wärmetauschereinheit können nebeneinander mehrere Wärmetauscher gleichen oder auch unterschiedlichen Typs angeordnet sein, die strömungstechnisch verbunden sein können, jedoch nicht verbunden sein müssen. Bevorzugt werden gleiche Wärmetauscher innerhalb eines Segments und/oder pro Segment eingesetzt, um einen möglichst an jeder Stelle gleichmäßigen Wärmeübergang auf das Speichermedium zu gewährleisten.

Vorzugsweise umfasst die mindestens eine Wärmetauschereinheit einen Wärmetauscher in Form einer wendelförmigen oder mäanderförmigen Rohrschlange. Eine solche Rohrschlange lässt sich einfach und flexibel in der gewünschten Form herstellen, wobei eine besonders effektive Ausnutzung des im Speichergefäß zur Verfügung stehenden Innenraums möglich ist. Wärmetauscher in Form einer Rohrschlangen eigenen sich dabei insbesondere für Speichergefäße mit einem zylindrischen Querschnitt.

Dabei hat es sich bewährt, wenn eine Wendelachse der wendelförmigen Rohrschlange in Richtung einer Längsachse des Speichergefäßes zeigend ausgerichtet ist. Die Versorgungsleitungen werden hier in unterschiedlichen Höhenlagen durch das Speichergefäß geführt und mit der Rohrschlange verbunden, wodurch eine Segmentierung der Rohrschlange entlang der Wendelachse erfolgt.

Mäanderförmige Rohrschlangen können dabei so im Speichergefäß angeordnet sein, dass die Mäander parallel zu einer senkrechten Ebene ausgerichtet sind. In einer bevorzugten Ausgestaltung der Erfindung sind die Mäander jedoch parallel zu einer horizontalen Ebene ausgerichtet, da diese Anordnung die Erhaltung einer thermischen Schichtung im Speichermedium begünstigt.

Dabei kann die mindestens eine Wärmetauschereinheit auch mehrere konzentrisch angeordnete wendelförmige Rohrschlangen umfassen, die parallel mit dem gleichen Wärmetauschermedium oder unterschiedlichen Wärmetauschermedien beschickt werden.

Die mindestens eine Wärmetauschereinheit umfasst in einer bevorzugten weiteren Ausgestaltung einen Wärmetauscher in Form eines Plattensystems mit senkrecht und/oder waagerecht orientierten Platten. Besonders bevorzugt sind hier Plattensysteme, bei denen die Platten des Wärmetauschers senkrecht stehend im Speichergefäß angeordnet sind. Wärmetauscher in Form eines Plattensystems eigenen sich dabei insbesondere für Speichergefäße mit einem rechteckigen Querschnitt.

Weiter Bauarten von Wärmetauschern sind bekannt und können eingesetzt werden.

Es hat sich bewährt, wenn ein Strömungsquerschnitt zum Durchtritt des mindestens einen Wärmetauschermediums innerhalb einer Wärmetauschereinheit umso größer ist, je weiter oben sich der Strömungsquerschnitt im Speichergefäß befindet. Auf diese Weise kann bei Verwendung unterschiedlicher Wärmetauschermedien, wie beispielsweise Wasserdampf und erhitztem Wasser, in einer Wärmetauschereinheit der Druck innerhalb der Wärmetauschereinheit an allen Stellen weitgehend konstant gehalten werden.

In einer bevorzugten Ausgestaltung der Speichervorrichtung weist das Speichergefäß zumindest eine Öffnung zum Befüllen mit Speichermedium und zum Entleeren auf. Weiterhin hat es sich bewährt, wenn das Speichergefäß mit einer Entlüftungseinrichtung und/oder Überdrucksicherung ausgestattet ist, die bei einem übermäßigen Druck im Speichergefäß eine Druckentlastung durchführt. Weiterhin hat es sich bewährt, am Speichergefäß eine Hilfseinrichtung zur automatischen Überprüfung und/oder Aufbereitung des Speichermediums vorzusehen, die beispielsweise einen pH-Wert des Speichermediums bestimmt und im Bedarfsfall reguliert, oder auch einen zumindest teilweisen Austausch des Speichermediums einleitet.

Je nach Druck im Speichergefäß kann die Siedetemperatur des verwendeten Speichermediums eingestellt werden. Vorzugsweise weist das Speichergefäß daher eine Druckregelungs- und Drucküberwachungseinrichtung auf.

Bevorzugt wird als Speichermedium Wasser oder eine wässrige Lösung in das Speichergefäß gefüllt. Wasser besitzt eine hohe spezifische Wärmekapazität, ist zudem kostengünstig und überall verfügbar. Bei einem Innendruck im Speichergefäß von beispielsweise 10 bar lässt sich bei Verwendung von Wasser als Speichermedium Wasser auf einem Temperaturniveau von bis zu 180°C speichern. Eine alternativ geeignete wässrige Lösung kann beispielsweise eine Salzlösung, eine Salzschmelze oder eine Alkohol-Wasser-Lösung sein.

In einer weiteren Alternative kann als Speichermedium aber auch eine organische Verbindung in das Speichergefäß gefüllt werden. Hier eignen sich beispielsweise Mineralöle, synthetische Öle und dergleichen.

Der Füllstand eines Speichermediums im Speichergefäß bewegt sich üblicherweise im Bereich von 80 bis 90 % der maximal möglichen Füllhöhe
In einer weiteren bevorzugten Ausgestaltung der Speichervorrichtung kann das Speichermedium auch durch mindestens ein Fluid gebildet sein, das im Speichergefäß gemäß der DE 10 2008 001 308 B3 in thermischer Schichtung zwischengelagert wird. Dazu sind am Speichergefäß Fluidzulaufleitungen und Fluidablaufleitungen in den unterschiedlichen Höhenlagen des Speichergefäßes vorgesehen. Das Fluid kann hier beispielsweise durch industrielles Brauchwasser oder Prozesswasser gebildet sein. In der Regel weisen aber die von einer Industrieanlage, wie beispielsweise einer Papierfertigungsanlage, bereitgestellten Fluide eine recht unterschiedliche Zusammensetzung auf, so dass eine gemeinsame Speicherung dieser im Speichergefäß nicht möglich oder sinnvoll ist.

Erfindungsgemäß umfasst die Speichervorrichtung eine Steuer- und Regeleinheit zur Steuerung und/oder Regelung der Absperreinrichtungen, welche eine automatische Auswahl und Betätigung der Absperreinrichtungen vornimmt. Dazu werden mittels der Steuer- und Regeleinheit die Temperaturen des Wärmetauschermediums und höhenlagenabhängig auch des Speichermediums erfasst, eine Differenzbildung durchgeführt und die Höhenlage bzw. zugehörigen Versorgungsleitung(en) zum Einspeisen und Ausleiten des Wärmetauschermediums in die bzw. aus der Wärmetauschereinheit ermittelt. Entsprechend werden von der Steuer- und Regeleinheit durch Betätigen der Absperreinrichtungen die zum Einspeisen und Ausleiten verwendeten Versorgungsleitungen geöffnet, während die übrigen Versorgungsleitungen geschlossen werden oder bleiben. Als Absperreinrichtungen haben sich insbesondere Absperrventile bewährt.

Alternativ zu einer automatischen Betätigung der Absperreinrichtungen mittels einer Steuer- und Regeleinheit können diese selbstverständlich auch per Hand durch Bedienpersonal betätigt werden, das die Temperaturen ausliest, vergleicht und die Auswahl der Versorgungsleitungen für das Einspeisen und Ausleiten eines Wärmetauschermediums selbst vornimmt.

In einer bevorzugten Ausgestaltung des Verfahrens wird zur Übertragung von Wärmeenergie auf das Speichermedium (=Ladebetrieb) das Wärmetauschermedium, ausgehend vom Einspeiseort in das Speichergefäß, in eine niedrigere Höhenlage des Speichergefäßes überführt und zur Übertragung von Wärmeenergie auf das Wärmetauschermedium (=Entladebetrieb) das Wärmetauschermedium, wieder ausgehend vom Einspeiseort in das Speichergefäß, in eine höhere Höhenlage des Speichergefäßes überführt. Dies trägt dazu bei, dass die thermische Schichtung des Speichermediums im Speichergefäß besonders wenig beeinflusst wird und gleichzeitig besonders viel Wärmeenergie übertragen wird.

Ein Ladebetrieb, bei dem das Wärmetauschermedium, ausgehend vom Einspeiseort in das Speichergefäß, zur Übertragung von Wärmeenergie auf das Speichermedium in eine höhere Höhenlage des Speichergefäßes überführt wird, sowie ein Entladebetrieb, bei dem das Wärmetauschermedium, wieder ausgehend vom Einspeiseort, zur Übertragung von Wärmeenergie auf das Wärmetauschermedium in eine niedrigere Höhenlage des Speichergefäßes überführt wird, ist zwar genauso möglich, beeinträchtigt allerdings die thermische Schichtung im Speichergefäß.

In einer bevorzugten Ausgestaltung der Erfindung wird die Speichervorrichtung zur Bereitstellung eines Wärmetauschermediums mit einer vorbestimmten Temperatur eingesetzt, das nach Durchlaufen der Speichervorrichtung für einen ausgewählten Prozess in genau der vorbestimmten Temperatur eingesetzt wird. Um die Temperatur eines Wärmetauschermediums auf die vorbestimmte Temperatur zu bringen, wird insbesondere die Durchlaufzeit des Wärmetauschermediums durch die Speichervorrichtung geregelt und/oder die Größe der Wärmetauscherfläche passend gewählt und eingestellt.

Als Wärmetauschermedium wird vorzugsweise Wasserdampf und/ oder Wasser eingesetzt. Es können aber auch wässrige Lösungen oder pumpfähige organische Verbindungen wie Öle und dergleichen eingesetzt werden.

Die Verwendung einer erfindungsgemäßen Speichervorrichtung zur Speicherung von Wärmeenergie, die einer Papierfertigungsanlage entstammenden Fluiden unter Verwendung der Fluide als erstes Wärmetauschermedium entnommen wird, und zur Rückführung der gespeicherten Wärmeenergie in die Papierfertigungsanlage mittels eines zweiten Wärmetauschermediums, hat sich bewährt.

Geeignete Fluide können beispielsweise durch erwärmtes Prozesswasser aus Prozesswannen, erwärmtes Kühlwasser oder Wasserdampf aus einer Papierfertigungsanlage bereitgestellt werden. Die gespeicherte Wärmeenergie wird insbesondere genutzt, um Trockner, Trockenhauben oder Trockenwalzen zur Trocknung von Papierbahnen zu betreiben, unterschiedlichste Wärmeverbraucher der Anlage zumindest teilweise zu versorgen oder eine Raumbeheizung durchzuführen.

Die Figuren 1 bis 11 sollen erfindungsgemäße Speichervorrichtungen und Verfahren zu deren Betrieb beispielhaft erläutern. So zeigt:
- FIG 1: schematisch eine mögliche erste Speichervorrichtung mit einem im Schnitt dargestellten Speichergefäß im Ladebetrieb;
- FIG 2: schematisch die erste Speichervorrichtung gemäß FIG 1 im Entladebetrieb;
- FIG 3: einen Ausschnitt aus einer möglichen zweiten Speichervorrichtung mit einem im Schnitt dargestellten Speichergefäß im Ladebetrieb;
- FIG 4: den Ausschnitt gemäß FIG 3 im Entladebetrieb;
- FIG 5: einen Ausschnitt aus einer möglichen dritten Speichervorrichtung mit einem im Schnitt dargestellten Speichergefäß im Ladebetrieb;
- FIG 6: den Ausschnitt gemäß FIG 5 im Entladebetrieb;
- FIG 7: einen Ausschnitt aus einer möglichen vierten Speichervorrichtung mit einem im Schnitt dargestellten Speichergefäß im Ladebetrieb;
- FIG 8: den Ausschnitt gemäß FIG 7 im Entladebetrieb;
- FIG 9: einen Längsschnitt durch einen Wärmetauscher;
- FIG 10: einen Querschnitt durch den Wärmetauscher gemäß FIG 9; und
- FIG 11: schematisch eine Papierfertigungsanlage mit einer Speichervorrichtung.

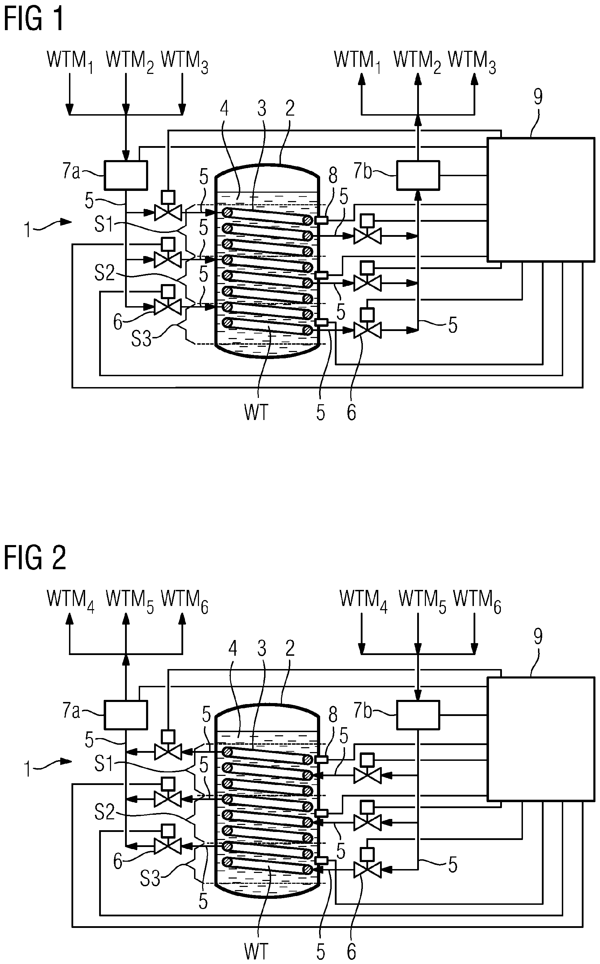

FIG 1 zeigt schematisch eine mögliche erste Speichervorrichtung 1 mit einem im Schnitt dargestellten wärmeisolierten Speichergefäß 2 im Ladebetrieb. Im Speichergefäß 2 befindet sich ein Speichermedium 4 in Form von Wasser und weiterhin eine Wärmetauschereinheit 3 umfassend einen Wärmetauscher WT in Form einer wendelförmigen Rohrschlange. Die Wärmetauschereinheit 3 ist mittels eines Wärmetauschermediums WTM₁, WTM₂, WTM₃ durchströmbar und zum Überführen des Wärmetauschermediums WTM₁, WTM₂, WTM₃ in unterschiedliche Höhenlagen des Speichergefäßes 2 eingerichtet. Der Wärmetauscher WT ist dazu in drei Segmente S1, S2, S3 unterteilt, die sich auf unterschiedlichen Höhenlagen des Speichergefäßes 2 im Speichermedium 4 befinden. An jedes der Segmente S1, S2, S3 sind jeweils zwei Versorgungsleitungen 5 angeschlossen, welche die Segmentierung bestimmen. Eine jede der mit dem Speichergefäß 2 verbundenen Versorgungsleitungen 5 ist mit einer Absperreinrichtung 6 verbunden, durch welche die jeweilige Versorgungsleitung 5 geöffnet oder verschlossen werden kann.

Weiterhin sind erste Temperaturfühler 7a, 7b zur Erfassung einer ersten Temperatur T1 des verwendeten Wärmetauschermediums auf einer dem Speichergefäß 2 abgewandten Seite der jeweiligen Absperreinrichtung 6 vorhanden. Im Bereich einer jeden Höhenlage des Speichergefäßes 2, in der sich ein Segment S1, S2, S3 befindet, ist jeweils ein zweiter Temperaturfühler 8 angeordnet, der zur Erfassung einer lokalen zweiten Temperatur T2 des Speichermediums 4 dient. Die Messergebnisse der ersten Temperaturfühler 7a, 7b und der zweiten Temperaturfühler 8 werden an eine Steuer- und Regeleinheit 9 übermittelt. Die Steuer- und Regeleinheit 9 ist weiterhin mit den Absperreinrichtungen 6 verbunden und in der Lage, diese unabhängig voneinander zu betätigen.

Die Wärmetauschermedien WTM₁, WTM₂, WTM₃, die hier zur Verfügung stehen und wahlweise zur Übertragung von Wärmeenergie auf das Speichermedium 4 verwendet werden können, sind in ihrer Temperatur und Zusammensetzung unterschiedlich. Das Wärmetauschermedium WTM₁ weist hier die höchste und das Wärmetauschermedium WTM₃ die niedrigste Temperatur auf.

Nachfolgend ist der Ladebetrieb im Detail beschrieben. Vorerst sind alle Absperreinrichtungen 6 geschlossen. Zuerst wird das Wärmetauschermedium WTM₁ in die Speichervorrichtung 1 eingespeist. Dabei wird seine erste Temperatur T1 mittels des ersten Temperaturfühlers 7a bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall wird der zweite Temperaturfühler 8 des Segments S1 ausgewählt. Die Steuer- und Regeleinheit 9 erzeugt einen Befehl zum Öffnen der Absperreinrichtung 6 am Einlass in das Segment S1 (im Bild links des Speichergefäßes 2) und weiterhin am Auslass aus dem Segment S3 (im Bild rechts des Speichergefäßes 2), so dass das Wärmetauschermedium WTM₁ durch alle drei Segmente S1, S2, S3 des Wärmetauschers WT von oben nach unten hindurch geleitet wird. Die vier übrigen Absperreinrichtungen 6 am Auslass aus dem Segment S1, am Ein- und Auslass des Segments S2 sowie am Einlass des Segments S3 bleiben geschlossen. Auf seinem Weg durch den Wärmetauscher WT wird das Wärmetauschermedium WTM₁ abgekühlt und das Speichermedium 4 erhitzt. Dabei wird eine thermische Schichtung im Speichermedium 4 erzeugt. Nach dem Ausschleusen des Wärmetauschermediums WTM₁ aus dem Speichergefäß 2 kann seine nun niedrigere Temperatur optional mittels des weiteren ersten Temperaturfühlers 7b gemessen und mittels der Steuer- und Regeleinheit 9 erfasst werden. Ein optionaler Vergleich zwischen den Temperaturen des Wärmetauschermediums WTM₁ im Bereich der beiden ersten Temperaturfühler 7a, 7b ermöglicht eine Ermittlung der an das Speichermedium 4 übertragenen Wärmemenge sowie des Zustands des Speichermediums 4.

Anschließend wird das Wärmetauschermedium WTM₂ in die Speichervorrichtung 1 eingespeist. Vor dem Einleiten des Wärmetauschermediums WTM₂ kann optional eine Spülflüssigkeit durch die Wärmetauschereinheit 3 geleitet werden. Sind übrigens die Wärmetauschermedien WTM₁, WTM₂, WTM₃ miteinander unverträglich, so kann auch pro Wärmetauschermedium eine gesonderte Wärmetauschereinheit vorhanden sein. Der apparative Aufwand für eine derartige Speichervorrichtung ist allerdings weitaus höher.

Die erste Temperatur T1 des Wärmetauschermediums WTM₂ wird mittels des ersten Temperaturfühlers 7a bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall wird der zweite Temperaturfühler 8 des Segments S2 ausgewählt. Die Steuer- und Regeleinheit 9 erzeugt einen Befehl zum Öffnen der Absperreinrichtung 6 am Einlass in das Segment S2 (im Bild links des Speichergefäßes 2) und weiterhin am Auslass aus dem Segment S3 (im Bild rechts des Speichergefäßes 2), so dass das Wärmetauschermedium WTM₂ durch die zwei Segmente S2, S3 des Wärmetauschers WT von oben nach unten hindurch geleitet wird. Die vier übrigen Absperreinrichtungen 6 am Ein- und Auslass aus dem Segment S1, am Auslass des Segments S2 und am Einlass des Segments S3 bleiben geschlossen. Auf seinem Weg durch den Wärmetauscher WT wird das Wärmetauschermedium WTM₂ abgekühlt und das Speichermedium 4 erhitzt. Dabei wird die thermische Schichtung im Speichermedium 4 beibehalten. Nach dem Ausschleusen des Wärmetauschermediums WTM₂ kann wie im Fall des Wärmetauschermediums WTM₁ verfahren werden.

Anschließend wird das Wärmetauschermedium WTM₃ in die Speichervorrichtung 1 eingespeist. Vor dem Einleiten des Wärmetauschermediums WTM₃ kann optional eine Spülflüssigkeit durch die Wärmetauschereinheit 3 geleitet werden.

Die erste Temperatur T1 des Wärmetauschermediums WTM₃ wird mittels des ersten Temperaturfühlers 7a bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall wird der zweite Temperaturfühler 8 des Segments S3 ausgewählt. Die Steuer- und Regeleinheit 9 erzeugt einen Befehl zum Öffnen der Absperreinrichtung 6 am Einlass in das Segment S3 (im Bild links des Speichergefäßes 2) und weiterhin am Auslass aus dem Segment S3 (im Bild rechts des Speichergefäßes 2), so dass das Wärmetauschermedium WTM₃ lediglich durch das Segmente S3 des Wärmetauschers WT von oben nach unten hindurch geleitet wird. Die vier übrigen Absperreinrichtungen 6 am Ein- und Auslass aus dem Segment S1 und Ein- und Auslass des Segments S2 bleiben geschlossen. Auf seinem Weg durch den Wärmetauscher WT wird das Wärmetauschermedium WTM₃ abgekühlt und das Speichermedium 4 erhitzt. Die thermische Schichtung im Speichermedium 4 wird beibehalten. Nach dem Ausschleusen des Wärmetauschermediums WTM₃ kann wie im Fall der Wärmetauschermedien WTM₁ und WTM₂ verfahren werden.

Die Reihenfolge der Verwendung der Wärmetauschermedien WTM₁, WTM₂, WTM₃ ist hier nur beispielhaft gewählt. Es können jederzeit auch andere Reihenfolgen für die Einspeisung in die Wärmetauschereinheit 3 gewählt werden.

FIG 2 zeigt schematisch die erste Speichervorrichtung 1 gemäß FIG 1 im Entladebetrieb. Gleiche Bezugszeichen kennzeichnen gleiche Elemente. Die Wärmetauschereinheit 3 ist hier mittels eines zweiten Wärmetauschermediums WTM₄, WTM₅, WTM₆ durchströmbar und zum Überführen des zweiten Wärmetauschermediums WTM₄, WTM₅, WTM₆ in unterschiedliche Höhenlagen des Speichergefäßes 2 eingerichtet. Die Wärmetauschermedien WTM₄, WTM₅, WTM₆, die hier zur Verfügung stehen und wahlweise zur Aufnahme von Wärmeenergie aus dem Speichermedium 4 verwendet werden können, sind in ihrer Temperatur und Zusammensetzung unterschiedlich voneinander. Das Wärmetauschermedium WTM₄ weist hier die höchste und das Wärmetauschermedium WTM₆ die niedrigste Temperatur auf.

Nachfolgend ist der Entladebetrieb im Detail beschrieben. Vorerst sind alle Absperreinrichtungen 6 geschlossen. Es wird zuerst das Wärmetauschermedium WTM₄ in die Speichervorrichtung 1 eingespeist. Vor dem Einleiten des Wärmetauschermediums WTM₄ kann optional eine Spülflüssigkeit durch die Wärmetauschereinheit 3 geleitet werden. Die Einspeiserichtung in die Speichervorrichtung 1 ist hier entgegengesetzt zu der im Ladebetrieb gewählt, was aber nicht immer der Fall sein muss.

Die erste Temperatur T1 des Wärmetauschermediums WTM₄ wird mittels des ersten Temperaturfühlers 7b bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall wird der zweite Temperaturfühler 8 des Segments S1 ausgewählt. Die Steuer- und Regeleinheit 9 erzeugt einen Befehl zum Öffnen der Absperreinrichtung 6 am Einlass in das Segment S1 (im Bild nun rechts des Speichergefäßes 2) und weiterhin am Auslass aus dem Segment S1 (im Bild nun links des Speichergefäßes 2), so dass das Wärmetauschermedium WTM₄ lediglich durch das Segment S1 des Wärmetauschers WT von unten nach oben hindurch geleitet wird. Die vier übrigen Absperreinrichtungen 6 am Ein- und Auslass des Segments S2 und am Ein- und Auslass des Segments S3 bleiben geschlossen. Auf seinem Weg durch den Wärmetauscher WT wird das Wärmetauschermedium WTM₄ erhitzt und das Speichermedium 4 abgekühlt, wobei eine thermische Schichtung im Speichermedium 4 erhalten bleibt. Nach dem Ausschleusen des Wärmetauschermediums WTM₄ aus dem Speichergefäß 2 kann seine nun erhöhte Temperatur optional mittels des weiteren ersten Temperaturfühlers 7a gemessen und mittels der Steuer- und Regeleinheit 9 erfasst werden. Ein optionaler Vergleich zwischen den Temperaturen des Wärmetauschermediums WTM₄ im Bereich der beiden ersten Temperaturfühler 7a, 7b ermöglicht eine Ermittlung der an das Speichermedium übertragenen Wärmemenge sowie des Zustands des Speichermediums 4.

Anschließend wird das Wärmetauschermedium WTM₅ in die Speichervorrichtung 1 eingespeist. Vor dem Einleiten des Wärmetauschermediums WTM₅ kann optional eine Spülflüssigkeit durch die Wärmetauschereinheit 3 geleitet werden. Die erste Temperatur T1 des Wärmetauschermediums WTM₅ wird mittels des ersten Temperaturfühlers 7b bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall ist es der zweite Temperaturfühler 8 des Segments S2. Die Steuer- und Regeleinheit 9 erzeugt einen Befehl zum Öffnen der Absperreinrichtung 6 am Einlass in das Segment S2 (im Bild nun rechts des Speichergefäßes 2) und weiterhin am Auslass aus dem Segment S1 (im Bild nun links des Speichergefäßes 2), so dass das Wärmetauschermedium WTM₅ durch die zwei Segmente S2, S1 des Wärmetauschers WT von unten nach oben hindurch geleitet wird. Die vier übrigen Absperreinrichtungen 6 am Einlass in das Segment S1, am Auslass des Segments S2 und am Ein- und Auslass des Segments S3 sowie am Auslass des Segments S3 bleiben geschlossen. Auf seinem Weg durch den Wärmetauscher WT wird das Wärmetauschermedium WTM₄ erhitzt und das Speichermedium 4 abgekühlt. Dabei wird die thermische Schichtung im Speichermedium 4 beibehalten. Nach dem Ausschleusen des Wärmetauschermediums WTM₅ kann wie im Fall des Wärmetauschermediums WTM₄ verfahren werden.

Anschließend wird das Wärmetauschermedium WTM₆ in die Speichervorrichtung 1 eingespeist. Vor dem Einleiten des Wärmetauschermediums WTM₆ kann optional eine Spülflüssigkeit durch die Wärmetauschereinheit 3 geleitet werden. Die erste Temperatur T1 des Wärmetauschermediums WTM₆ wird mittels des ersten Temperaturfühlers 7b bestimmt und an die Steuer- und Regeleinheit 9 übermittelt. Gleichzeitig werden mittels der zweiten Temperaturfühler 8 die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8 aus, an dem der Betrag dieser Differenz minimal ist. In diesem Fall wird der zweite Temperaturfühler 8 des Segments S3 ausgewählt. Die Steuer- und Regeleinheit 9 erzeugt einen Befehl zum Öffnen der Absperreinrichtung 6 am Einlass in das Segment S3 (im Bild nun rechts des Speichergefäßes 2) und weiterhin am Auslass aus dem Segment S2 (im Bild nun links des Speichergefäßes 2), so dass das Wärmetauschermedium WTM₆ zwei Segmente S3, S2 des Wärmetauschers WT von unten nach oben hindurch geleitet wird. Das Wärmetauschermedium WTM₆ wird lediglich mit einer Temperatur benötigt, die bereits im Segment S2 erreicht ist, und wird daher bereits an dieser Stelle aus dem Speichergefäß 2 ausgeschleust. Die vier übrigen Absperreinrichtungen 6 am Ein- und Auslass des Segments S1, am Einlass des Segments S2 und am Auslass des Segments S3 bleiben geschlossen. Auf seinem Weg durch den Wärmetauscher WT wird das Wärmetauschermedium WTM₆ erhitzt und das Speichermedium 4 abgekühlt. Die thermische Schichtung im Speichermedium 4 wird beibehalten. Nach dem Ausschleusen des Wärmetauschermediums WTM₆ kann wie im Fall der Wärmetauschermedien WTM₄ und WTM₅ verfahren werden. Die Reihenfolge der Verwendung der Wärmetauschermedien WTM₄, WTM₅, WTM₆ ist hier nur beispielhaft gewählt. Es können jederzeit auch andere Reihenfolgen gewählt werden.

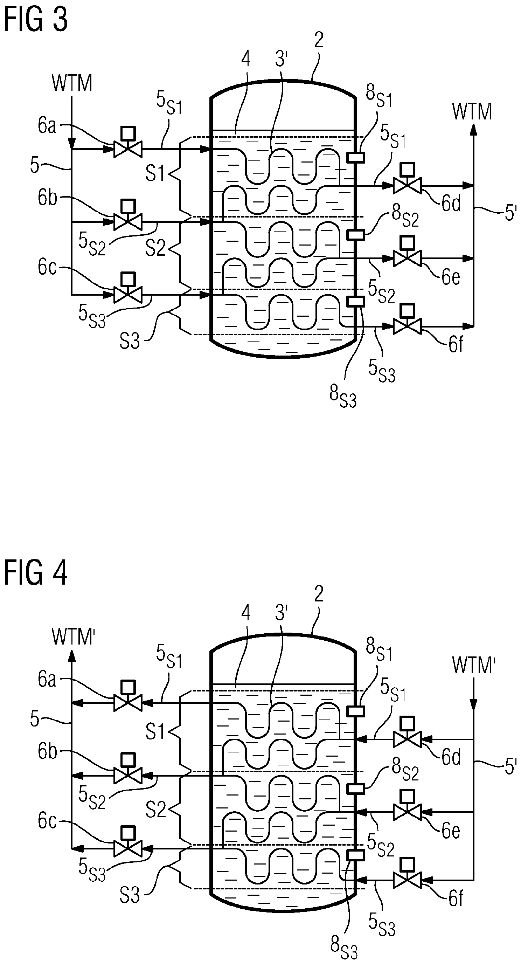

FIG 3 zeigt einen Ausschnitt aus einer möglichen zweiten Speichervorrichtung mit einem im Schnitt dargestellten Speichergefäß 2 im Ladebetrieb. Im Speichergefäß 2 befindet sich ein Speichermedium 4 in Form von Wasser und weiterhin eine Wärmetauschereinheit 3' umfassend einen Wärmetauscher mit schematisch dargestellten, mäanderförmigen Rohrschlangen, deren Mäander parallel zu einer senkrechten Ebene ausgerichtet sind. Die Wärmetauschereinheit 3' ist mittels eines ersten Wärmetauschermediums WTM durchströmbar und zum Überführen des ersten Wärmetauschermediums WTM in unterschiedliche Höhenlagen des Speichergefäßes 2 eingerichtet. Der Wärmetauscher ist dazu in drei Segmente S1, S2, S3 unterteilt, die sich auf unterschiedlichen Höhenlagen des Speichergefäßes 2 im Speichermedium 4 befinden. An jedes der Segmente S1, S2, S3 sind jeweils zwei Versorgungsleitungen 5_{S1}, 5_{S2}, 5_{S3} angeschlossen, welche die Segmentierung bestimmen. Eine jede der mit dem Speichergefäß 2 verbundenen Versorgungsleitungen 5_{S1}, 5_{S2}, 5_{S3} ist mit einer Absperreinrichtung 6a, 6b, 6c, 6d, 6e, 6f verbunden, durch welche die jeweilige Versorgungsleitung 5_{S1}, 5_{S2}, 5_{S3} geöffnet oder verschlossen werden kann. Die Versorgungsleitungen 5_{S1}, 5_{S2}, 5_{S3} werden ihrerseits über weitere Versorgungsleitungen 5, 5' mit Wärmetauschermedium versorgt. Im Bereich einer jeden Höhenlage des Speichergefäßes 2, in der sich ein Segment S1, S2, S3 befindet, ist jeweils ein zweiter Temperaturfühler 8_{S1}, 8_{S2}, 8_{S3} angeordnet, der zur Erfassung einer lokalen zweiten Temperatur T2 des Speichermediums 4 dient. Die Messergebnisse der hier nicht dargestellten ersten Temperaturfühler 7a, 7b und der zweiten Temperaturfühler 8_{S1}, 8_{S2}, 8_{S3} werden an eine ebenfalls hier nicht dargestellte Steuer- und Regeleinheit 9 übermittelt. Die Steuer- und Regeleinheit 9 ist weiterhin mit den Absperreinrichtungen 6a, 6b, 6c, 6d, 6e, 6f verbunden und in der Lage, diese unabhängig voneinander zu betätigen.

Nachfolgend ist der Ladebetrieb im Detail beschrieben. Vorerst sind alle Absperreinrichtungen 6a, 6b, 6c, 6d, 6e, 6f geschlossen. Es wird das erste Wärmetauschermedium WTM in die Wärmetauschereinheit 3' eingespeist. Dabei wird seine erste Temperatur T1 mittels des ersten Temperaturfühlers 7a bestimmt und an die Steuer- und Regeleinheit 9 übermittelt. Gleichzeitig werden mittels der zweiten Temperaturfühler 8_{S1}, 8_{S2}, 8_{S3} die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8_{S1}, 8_{S2}, 8_{S3} aus, an dem der Betrag dieser Differenz minimal ist. In diesem Fall wird der zweite Temperaturfühler 8_{S1} des Segments S1 ausgewählt. Die Steuer- und Regeleinheit 9 erzeugt einen Befehl zum Öffnen der Absperreinrichtung 6a am Einlass in das Segment S1 und weiterhin der Absperreinrichtung 6f am Auslass aus dem Segment S3, so dass das erste Wärmetauschermedium WTM durch alle drei Segmente S1, S2, S3 des Wärmetauschers von oben nach unten hindurch geleitet wird. Die vier übrigen Absperreinrichtungen 6b, 6c, 6d, 6e bleiben geschlossen. Auf seinem Weg durch den Wärmetauscher wird das erste Wärmetauschermedium WTM abgekühlt und das Speichermedium 4 erhitzt. Dabei wird eine thermische Schichtung im Speichermedium 4 erzeugt und/oder beibehalten. Nach dem Ausschleusen des ersten Wärmetauschermediums WTM aus dem Speichergefäß 2 kann seine nun niedrigere Temperatur optional mittels des weiteren ersten Temperaturfühlers 7b gemessen und mittels der Steuer- und Regeleinheit 9 erfasst werden. Ein optionaler Vergleich zwischen den Temperaturen des ersten Wärmetauschermediums WTM im Bereich der beiden ersten Temperaturfühler 7a, 7b ermöglicht eine Ermittlung der an das Speichermedium übertragenen Wärmemenge sowie des Zustands des Speichermediums 4.

FIG 4 zeigt den Ausschnitt gemäß FIG 3 im Entladebetrieb. Gleiche Bezugszeichen kennzeichnen gleiche Elemente. Die Wärmetauschereinheit 3' ist hier mittels eines zweiten Wärmetauschermediums WTM' durchströmbar und zum Überführen des zweiten Wärmetauschermediums WTM' in unterschiedliche Höhenlagen des Speichergefäßes 2 eingerichtet.

Nachfolgend ist der Entladebetrieb im Detail beschrieben. Vorerst sind alle Absperreinrichtungen 6a, 6b, 6c, 6d, 6e, 6f geschlossen. Es wird zuerst das zweite Wärmetauschermedium WTM' in die Wärmetauschereinheit 3' eingespeist. Vor dem Einleiten des zweiten Wärmetauschermediums WTM' kann optional eine Spülflüssigkeit durch die Wärmetauschereinheit 3' geleitet werden. Die Einspeiserichtung in die Speichervorrichtung ist hier entgegengesetzt zu der im Ladebetrieb gewählt, muss es aber nicht sein. Dabei wird die erste Temperatur T1 des zweiten Wärmetauschermediums WTM' mittels des ersten Temperaturfühlers 7b bestimmt und an die Steuer- und Regeleinheit 9 übermittelt. Gleichzeitig werden mittels der zweiten Temperaturfühler 8_{S1}, 8_{S2}, 8_{S3} die zweiten Temperaturen T2 des Speichermediums 4 pro Segment S1, S2, S3 bestimmt und an die Steuer- und Regeleinheit 9 übermittelt. Diese führt nun eine Differenzbildung zwischen der ersten Temperatur T1 und jeder der zweiten Temperaturen T2 durch und wählt denjenigen der zweiten Temperaturfühler 8_{S1}, 8_{S2}, 8_{S3} aus, an dem der Betrag dieser Differenz minimal ist. In diesem Fall wird der zweite Temperaturfühler 8_{S2} des Segments S2 ausgewählt. Die Steuer- und Regeleinheit 9 erzeugt einen Befehl zum Öffnen der Absperreinrichtung 6e am Einlass in das Segment S2 und weiterhin der Absperreinrichtung 6a am Auslass aus dem Segment S1, so dass das zweite Wärmetauschermedium WTM' durch das Segment S2 und das Segment S1 des Wärmetauschers von unten nach oben hindurch geleitet wird. Die vier übrigen Absperreinrichtungen 6b, 6c, 6d, 6f bleiben geschlossen. Auf seinem Weg durch den Wärmetauscher wird das zweite Wärmetauschermedium WTM' erhitzt und das Speichermedium 4 abgekühlt, wobei eine thermische Schichtung im Speichermedium 4 erhalten bleibt. Nach dem Ausschleusen des zweiten Wärmetauschermediums WTM' aus dem Speichergefäß 2 kann seine nun erhöhte Temperatur optional mittels des weiteren ersten Temperaturfühlers 7a gemessen und mittels der Steuer- und Regeleinheit 9 erfasst werden. Ein optionaler Vergleich zwischen den Temperaturen des zweiten Wärmetauschermediums WTM' im Bereich der beiden ersten Temperaturfühler 7a, 7b ermöglicht eine Ermittlung der an das Speichermedium 4 übertragenen Wärmemenge sowie des Zustands des Speichermediums 4.

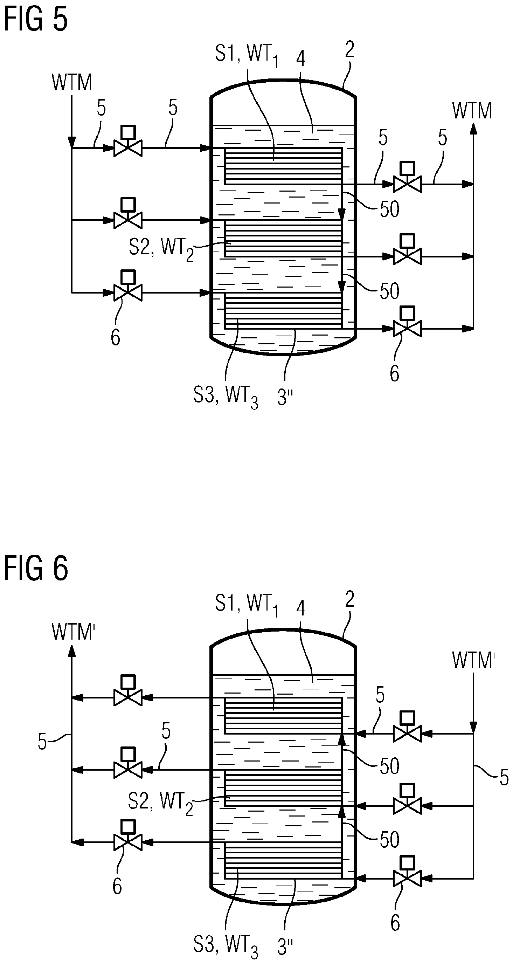

FIG 5 zeigt einen Ausschnitt aus einer möglichen dritten Speichervorrichtung mit einem im Schnitt dargestellten Speichergefäß 2 im Ladebetrieb. Im Speichergefäß 2 befindet sich ein Speichermedium 4 in Form von Wasser und weiterhin eine Wärmetauschereinheit 3" umfassend drei Wärmetauscher WT₁, WT₂, WT₃. Die Wärmetauschereinheit 3" ist mittels eines ersten Wärmetauschermediums WTM durchströmbar und zum Überführen des ersten Wärmetauschermediums WTM in unterschiedliche Höhenlagen des Speichergefäßes 2 eingerichtet. Die Wärmetauschereinheit 3" ist mittels der drei Wärmetauscher WT₁, WT₂, WT₃ in drei Segmente S1, S2, S3 unterteilt, die sich auf unterschiedlichen Höhenlagen des Speichergefäßes 2 im Speichermedium 4 befinden. Die separaten Wärmetauscher WT₁, WT₂, WT₃ liegen jeweils in Form eines Rohrbündels vor und sind miteinander über Zusatzleitungen 50 strömungstechnisch in Serie geschaltet. An jeden Wärmetauscher WT₁, WT₂, WT₃ bzw. jedes der Segmente S1, S2, S3 sind jeweils zwei Versorgungsleitungen 5 angeschlossen, welche die Segmentierung bestimmen. Eine jede der mit dem Speichergefäß 2 verbundenen Versorgungsleitungen 5 ist mit einer Absperreinrichtung 6 verbunden, durch welche die jeweilige Versorgungsleitung 5 geöffnet oder verschlossen werden kann. Die Versorgungsleitungen 5 werden ihrerseits über weitere Versorgungsleitungen 5 mit Wärmetauschermedium ver- oder entsorgt. Im Bereich einer jeden Höhenlage des Speichergefäßes 2, in der sich ein Segment S1, S2, S3 befindet, ist jeweils ein hier nicht dargestellter ein zweiter Temperaturfühler angeordnet, der zur Erfassung einer lokalen zweiten Temperatur T2 des Speichermediums 4 dient. Die Messergebnisse der hier nicht dargestellten ersten und zweiten Temperaturfühler werden an eine ebenfalls hier nicht dargestellte Steuer- und Regeleinheit übermittelt. Die Steuer- und Regeleinheit ist weiterhin mit den Absperreinrichtungen 6 verbunden und in der Lage, diese unabhängig voneinander zu betätigen. Der Ladebetrieb wird wie zu FIG 1, FIG 3 oder FIG 5 bereits im Detail erläutert durchgeführt.

FIG 6 zeigt den Ausschnitt gemäß FIG 5 im Entladebetrieb. Gleiche Bezugszeichen kennzeichnen gleiche Elemente. Der Entladebetrieb wird analog wie zu FIG 2 oder FIG 4 bereits im Detail erläutert durchgeführt.

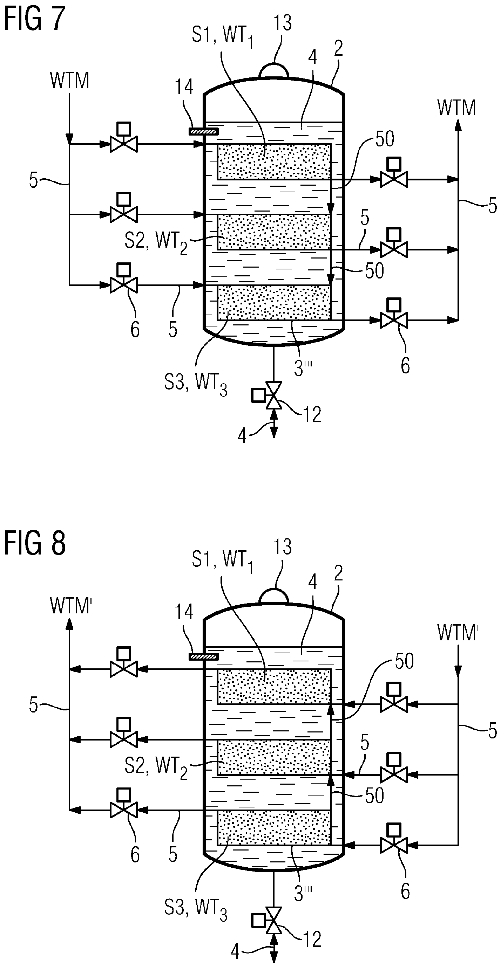

FIG 7 zeigt einen Ausschnitt aus einer möglichen vierten Speichervorrichtung mit einem im Schnitt dargestellten Speichergefäß 2 im Ladebetrieb. Im Speichergefäß 2 befindet sich ein Speichermedium 4 in Form von Wasser und weiterhin eine Wärmetauschereinheit 3''' umfassend drei Wärmetauscher WT₁, WT₂, WT₃. Die Wärmetauschereinheit 3'" ist mittels eines ersten Wärmetauschermediums WTM durchströmbar und zum Überführen des ersten Wärmetauschermediums WTM in unterschiedliche Höhenlagen des Speichergefäßes 2 eingerichtet. Die Wärmetauschereinheit 3''' ist mittels der drei Wärmetauscher WT₁, WT₂, WT₃ in drei Segmente S1, S2, S3 unterteilt, die sich auf unterschiedlichen Höhenlagen des Speichergefäßes 2 im Speichermedium 4 befinden. Die separaten Wärmetauscher WT₁, WT₂, WT₃ liegen jeweils in Form eines Plattenbündels vor und sind miteinander über Zusatzleitungen 50 strömungstechnisch in Serie geschaltet. An jeden Wärmetauscher WT₁, WT₂, WT₃ bzw. jedes der Segmente S1, S2, S3 sind jeweils zwei Versorgungsleitungen 5 angeschlossen, welche die Segmentierung bestimmen. Eine jede der mit dem Speichergefäß 2 verbundenen Versorgungsleitungen 5 ist mit einer Absperreinrichtung 6 verbunden, durch welche die jeweilige Versorgungsleitung 5 geöffnet oder verschlossen werden kann. Die Versorgungsleitungen 5 werden ihrerseits über weitere Versorgungsleitungen 5 mit Wärmetauschermedium ver- oder entsorgt.

Das Speichergefäß 2 weist hier, vorzugsweise auch in den anderen Beispielen, ein Entlüftung- und Überdruckventil 13, eine Ein- und Auslassvorrichtung 12 für das Speichermedium 4 (siehe Doppelpfeil) und eine Mess- und Regeleinrichtung 14 zur Bestimmung und Beeinflussung des pH-Werts des Speichermediums 4 auf.

Im Bereich einer jeden Höhenlage des Speichergefäßes 2, in der sich ein Segment S1, S2, S3 befindet, ist jeweils ein hier nicht dargestellter zweiter Temperaturfühler angeordnet, der zur Erfassung einer lokalen zweiten Temperatur T2 des Speichermediums 4 dient. Die Messergebnisse der hier nicht dargestellten ersten und zweiten Temperaturfühler werden an eine ebenfalls hier nicht dargestellte Steuer- und Regeleinheit übermittelt. Die Steuer- und Regeleinheit ist weiterhin mit den Absperreinrichtungen 6 verbunden und in der Lage, diese unabhängig voneinander zu betätigen. Der Ladebetrieb wird wie zu FIG 1 oder FIG 3 bereits im Detail erläutert durchgeführt.

FIG 8 zeigt den Ausschnitt gemäß FIG 7 im Entladebetrieb. Gleiche Bezugszeichen kennzeichnen gleiche Elemente. Der Entladebetrieb wird analog wie zu FIG 2 oder FIG 4 bereits im Detail erläutert durchgeführt.

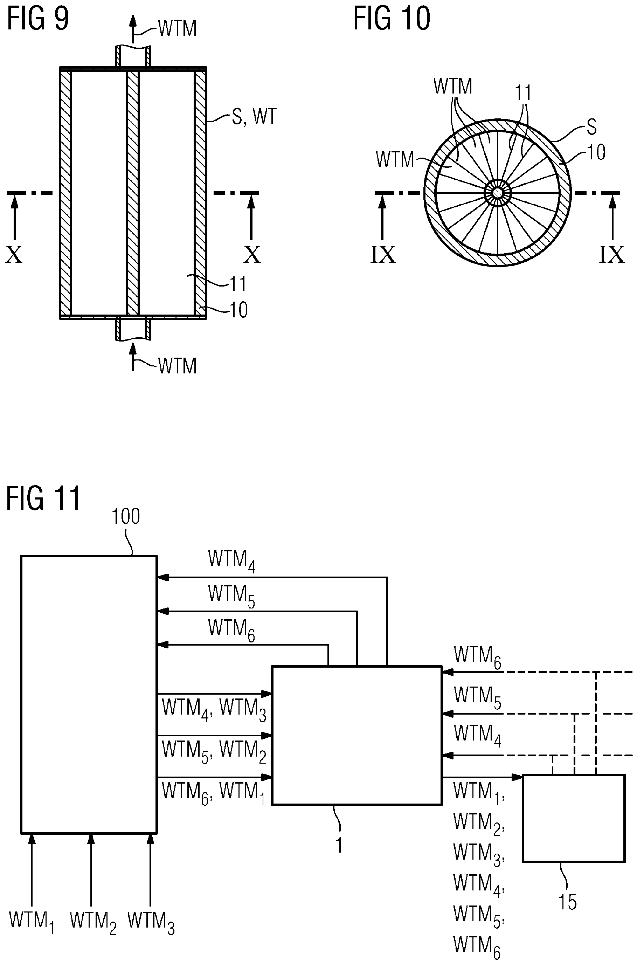

FIG 9 zeigt einen Längsschnitt durch einen bevorzugten Wärmetauscher WT. Der Wärmetauscher WT wird dabei vorzugsweise als ein Segment einer Wärmetauschereinheit einer erfindungsgemäßen Speichervorrichtung eingesetzt und weist einen Zu- und einen Abflussstutzen für ein Wärmetauschermedium WTM, ein langgestrecktes Mantelrohr 10 sowie rechteckige Platten 11 auf, deren kurze Seiten im Mantelrohr 10 an die Zu- und Abflussstutzen angrenzend angeordnet sind und deren lange Seiten einerseits in Richtung einer Mantelrohr-Längsachse und andererseits in Richtung einer Mantelrohr-Innenwandung zeigen. In einem Speichergefäß 2 wird der Wärmetauscher WT bevorzugt mit senkrechter Ausrichtung der Mantelrohr-Längsachse allein oder in größerer Anzahl nebeneinander innerhalb eines oder eines jeden Segments S betrieben.

FIG 10 zeigt einen Querschnitt durch den Wärmetauscher WT gemäß FIG 9. Das Wärmetauschermedium WTM strömt zwischen den Platten 11 vom Zuflussstutzen in Richtung Abflussstutzen.

FIG 11 zeigt schematisch eine Papierfertigungsanlage 100 mit einer Speichervorrichtung 1. Die Papierfertigungsanlage 100 wird hier mit drei unterschiedlichen Fluiden, beispielsweise auf Wasserbasis versorgt, die der Einfachheit halber bereits beim Eintritt in die Papierfertigungsanlage 100 als erste Wärmetauschermedien WTM₁, WTM₂, WTM₃ bezeichnet sind. Nach Durchlaufen der Papierfertigungsanlage 100 werden die ersten Wärmetauschermedien WTM₁, WTM₂, WTM₃, je nach Ausgestaltung der mindestens einen Wärmetauschereinheit der Speichervorrichtung 1, dieser bei Verwendung einer Wärmetauschereinheit mit einem segmentierten Wärmetauscher oder mehrerer strömungstechnisch in Reihe geschalteter separater Wärmetauscher nacheinander oder abwechselnd zugeführt.

Nach Durchlaufen der Speichervorrichtung 1 werden die ersten Wärmetauschermedien WTM₁, WTM₂, WTM₃ entsorgt oder, wie hier dargestellt, in einem Auffangbehälter 15 gesammelt und zumindest teilweise wiederverwendet.

Die von den ersten Wärmetauschermedien WTM₁, WTM₂, WTM₃ an das Speichermedium abgegebene Wärmeenergie wird auf zweite Wärmetauschermedien WTM₄, WTM₅, WTM₆ übertragen, die der Papierfertigungsanlage 100 zur Durchführung weiterer Prozessschritte zugeführt werden. Die zweiten Wärmetauschermedien WTM₄, WTM₅, WTM₆ können zumindest teilweise dem Auffangbehälter 15 entstammen oder aus anderer Quelle zugeführt werden. Nach Verwendung der zweiten Wärmetauschermedien WTM₄, WTM₅, WTM₆ können diese ebenfalls wieder der Speichervorrichtung 1 zwecks Wärmetausches zugeführt werden.

Alternativ oder in Kombination dazu kann, sofern eines oder mehrere der von der Papierfertigungsanlage 100 benötigten Fluide, beispielsweise ein Öl wie Schmieröl, die Wärmetauschereinheit einen separaten segmentierten Wärmetauscher aufweisen, der lediglich für Öl verwendet wird. Dabei können beispielsweise konzentrisch angeordnete, jeweils segmentierte wendelförmige Rohrschlangen und dergleichen zum Einsatz kommen, die jeweils nur von bestimmten Wärmetauschermedien durchströmt werden.

Es ist für einen Fachmann offensichtlich, dass die Ausgestaltung des Speichergefäßes sowie der in der mindestens einen Wärmetauschereinheit eingesetzten Wärmetauscher in weiten Grenzen variiert werden kann. Dabei können innerhalb eines Segments einer Wärmetauschereinheit mehrere Wärmetauscher enthalten sein, die strömungstechnisch in Serie oder auch nicht in Serie geschaltet sind.

## Patentansprüche

1. Speichervorrichtung (1) zur temporären Speicherung von Wärmeenergie, umfassend
- ein wärmeisoliertes Speichergefäß (2) zur Aufnahme eines Speichermediums (4),
- mindestens eine im Speichergefäß (2) angeordnete, mittels mindestens eines Wärmetauschermediums durchströmbare, in Segmente (S,S1,S2,S3) unterteilte Wärmetauschereinheit (3,3',3",3'''), die zum Überführen des mindestens einen Wärmetauschermediums in unterschiedliche Höhenlagen des Speichergefäßes (2) eingerichtet ist,
- eine Anzahl an Versorgungsleitungen (5,5', 5_{S1}, 5_{S2}, 5_{S3}) zur Zuführung und/oder Abführung des mindestens einen Wärmetauschermediums, wobei jeweils mindestens eine Versorgungsleitung (5_{S1},5_{S2},5_{S3}) mit einem der Segmente (S,S1,S2,S3) verbunden ist,
- eine Absperreinrichtung (6,6a,6b,6c,6d,6e,6f) pro mit einem Segment verbundener Versorgungsleitung (5_{S1},5_{S2},5_{S3}),
- mindestens einen ersten Temperaturfühler (7a,7b) zur Erfassung einer ersten Temperatur T1 des mindestens einen Wärmetauschermediums auf einer dem Speichergefäß (2) abgewandten Seite der jeweiligen Absperreinrichtung (6,6a,6b,6c,6d,6e,6f), und
- mindestens einen zweiten Temperaturfühler (8,8_{S1},8_{S2},8_{S3}) im Bereich einer jeden Höhenlage, in der sich ein Segment (S,S1,S2,S3) befindet, zur Erfassung einer lokalen zweiten Temperatur T2 des Speichermediums (4); **dadurch gekennzeichnet dass** die Speichervorrichtung eine Steuer- und Regeleinheit (9) zur Steuerung und/oder Regelung der Absperreinrichtung (6,6a,6b,6c,6d,6e,6f) umfasst, wobei die 30 Steuer- und Regeleinheit die Temperaturen des Wärmetauschermediums T1 und höhenlagenabhängig des Speichermediums T2 erfasst um eine Differenzbildung durchzuführen, und die Höhenlage oder die zugehörigen Versorgungsleitungen zum Einspeisen und Ausleiten des Wärmetauschermediums in die oder aus der Wärmetauschereinheit ermittelbar ist, wobei die Absperreinrichtungen 6,6a,6b,6c,6d,6e,6f) zum Einspeisen und Ausleiten der verwendeten Versorgungsleitungen als geöffnet vorgesehen ist, wobei ein verschließen und geschlossen halten der übrigen Versorgungsleitungen (5_{S1}, 5_{S2}, 5_{S3}) vorgesehen ist.

2. Speichervorrichtung nach Anspruch 1, wobei das Speichergefäß (2) eine senkrecht stehende Längsachse aufweist und wobei ein Schwerpunkt der mindestens einen Wärmetauschereinheit (3,3',3",3''') zu der Längsachse zentriert im Speichergefäß (2) angeordnet ist.

3. Speichervorrichtung nach einem der Ansprüche 1 oder 2, wobei die mindestens eine Wärmetauschereinheit (3,3',3",3''') pro Segment (S,S1,S2,S3) einen Wärmetauscher (WT₁, WT₂, WT₃) umfasst.

4. Speichervorrichtung nach Anspruch 3, wobei die Wärmetauscher (WT₁, WT₂, WT₃) in unterschiedlichen Höhenlagen des Speichergefäßes (2) angeordnet und strömungstechnisch in Serie geschaltet sind.

5. Speichervorrichtung nach einem der Ansprüche 1 bis 4, wobei die mindestens eine Wärmetauschereinheit (3,3',3",3''') einen Wärmetauscher (WT) in Form einer wendelförmigen oder mäanderförmigen Rohrschlange umfasst.

6. Speichervorrichtung nach Anspruch 5, wobei eine Wendelachse der wendelförmigen Rohrschlange in Richtung einer Längsachse des Speichergefäßes (2) zeigend ausgerichtet ist.

7. Speichervorrichtung nach einem der Ansprüche 1 bis 6, wobei die mindestens eine Wärmetauschereinheit (3,3",3",3''') einen Wärmetauscher (WT₁, WT₂, WT₃) in Form eines Plattensystems mit senkrecht und/oder waagerecht orientierten Platten (11) umfasst.

8. Speichervorrichtung nach einem der Ansprüche 1 bis 7, wobei ein Strömungsquerschnitt zum Durchtritt des mindestens einen Wärmetauschermediums innerhalb einer Wärmetauschereinheit (3,3',3",3''') umso größer ist, je weiter oben sich der Strömungsquerschnitt im Speichergefäß (2) befindet.

9. Speichervorrichtung nach einem der Ansprüche 1 bis 8, wobei weiterhin eine Steuer- und Regeleinheit (9) zur Steuerung und/oder Regelung der Absperreinrichtungen (6,6a,6b,6c,6d,6e,6f) vorhanden ist.

10. Verfahren zum Betreiben einer Speichervorrichtung (1) nach einem der Ansprüche 1 bis 9, wobei ein Speichermedium (4) die mindestens eine Wärmetauschereinheit (3,3',3",3''') und einen jeden der zweiten Temperaturfühler (8,8_{S1},8_{S2},8_{S3}) bedeckend ins Speichergefäß (2) gefüllt wird, umfassend folgende Schritte:
- Bereitstellen eines Wärmetauschermediums mit einer ersten Temperatur T1;
- Erfassen der ersten Temperatur T1 mittels mindestens eines ersten Temperaturfühlers (7a);
- Erfassen einer zweiten Temperatur T2 mittels eines jeden der zweiten Temperaturfühler (8,8_{S1},8_{S2},8_{S3});
- Auswählen des oder der zweiten Temperaturfühler (8,8_{S1},8_{S2},8_{S3}), an dem/denen ein Betrag einer Differenz T1 - T2 minimal ist,
- Einleiten des Wärmetauschermediums in ein, dem ausgewählten zweiten Temperaturfühler (8,8_{S1},8_{S2},8_{S3}) aufgrund der gleichen Höhenlage im Speichergefäß (2) zugeordnetes Segment (S1, S2, S3);
- Überführen des Wärmetauschermediums in eine unterschiedliche Höhenlage des Speichergefäßes (2), wobei Wärmeenergie zwischen dem Wärmetauschermedium und dem Speichermedium (4) übertragen wird, und
- Ausleiten des Wärmetauschermediums aus dem Speichergefäß (2) .

11. Verfahren nach Anspruch 10, wobei zur Übertragung von Wärmeenergie auf das Speichermedium (4) das Wärmetauschermedium in eine niedrigere Höhenlage des Speichergefäßes (2) überführt wird und dass zur Übertragung von Wärmeenergie auf das Wärmetauschermedium das Wärmetauschermedium in eine höhere Höhenlage des Speichergefäßes (2) überführt wird.

12. Verfahren nach Anspruch 10 oder Anspruch 11, wobei als Speichermedium (4) Wasser oder eine wässrige Lösung in das Speichergefäß (2) gefüllt wird.

13. Verfahren nach Anspruch 10 oder Anspruch 11, wobei als Speichermedium (4) eine organische Verbindung in das Speichergefäß (2) gefüllt wird.

14. Verfahren nach einem der Ansprüche 10 bis 13, wobei als Wärmetauschermedium Wasserdampf und/oder Wasser eingesetzt wird.

15. Verwendung einer Speichervorrichtung (1) nach einem der Ansprüche 1 bis 9 zur Speicherung von Wärmeenergie, die einer Papierfertigungsanlage (100) entstammenden Fluiden unter Verwendung der Fluide als erstes Wärmetauschermedium (WTM,WTM1,WTM2,WTM3) entnommen wird, und zur Rückführung der gespeicherten Wärmeenergie in die Papierfertigungsanlage (100) mittels eines zweiten Wärmetauschermediums (WTM',WTM4,WTM5,WTM6).

## Claims

1. Storage apparatus (1) for temporarily storing thermal energy, comprising
- a thermally insulated storage vessel (2) for holding a storage medium (4),
- at least one heat exchanger unit (3, 3', 3", 3''') which is arranged in the storage vessel (2), can have at least one heat exchanger medium flow through it, is subdivided into segments (S, S1, S2, S3) and is configured to convert the at least one heat exchanger medium into different vertical positions of the storage vessel (2),
- a number of supply lines (5, 5', 5ₛ₁, 5ₛ₂, 5ₛ₃) for supplying and/or discharging the at least one heat exchanger medium, wherein at least one supply line (5ₛ₁, 5ₛ₂, 5ₛ₃) is connected to one of the segments (S, S1, S2, S3) in each case,
- a shut-off device (6, 6a, 6b, 6c, 6d, 6e, 6f) for each supply line (5ₛ₁, 5ₛ₂, 5ₛ₃) connected to a segment,
- at least one first temperature sensor (7a, 7b) for capturing a first temperature T1 of the at least one heat exchanger medium on a side of the respective shut-off device (6, 6a, 6b, 6c, 6d, 6e, 6f) facing away from the storage vessel (2), and
- at least one second temperature sensor (8, 8ₛ₁, 8ₛ₂, 8ₛ₃), in the region of each vertical position in which a segment (S, S1, S2, S3) is situated, for capturing a local second temperature T2 of the storage medium (4), **characterized in that** the storage apparatus comprises a control and regulating unit (9) for controlling and/or regulating the shut-off device (6, 6a, 6b, 6c, 6d, 6e, 6f), wherein the control and regulating unit captures the temperatures of the heat exchanger medium T1 and, in a manner dependent on the vertical position, of the storage medium T2 in order to form a difference, and the vertical position or the associated supply lines for feeding the heat exchanger medium into the heat exchanger unit and for discharging the heat exchanger medium from the heat exchanger unit can be determined, wherein the shut-off device (6, 6a, 6b, 6c, 6d, 6e, 6f) is provided as open for the purpose of feeding in and channelling out the supply lines used, wherein there is provision for the other supply lines (5ₛ₁, 5ₛ₂, 5ₛ₃) to be closed and kept closed.

2. Storage apparatus according to Claim 1, wherein the storage vessel (2) has a vertical longitudinal axis, and wherein a centre of gravity of the at least one heat exchanger unit (3, 3', 3", 3''') is arranged in a centred manner with respect to the longitudinal axis in the storage vessel (2).

3. Storage apparatus according to either of Claims 1 and 2, wherein the at least one heat exchanger unit (3, 3', 3", 3''') comprises a heat exchanger (WT₁, WT₂, WT₃) for each segment (S, S1, S2, S3).

4. Storage apparatus according to Claim 3, wherein the heat exchangers (WT₁, WT₂, WT₃) are arranged in different vertical positions of the storage vessel (2) and are connected in series in terms of flow.

5. Storage apparatus according to one of Claims 1 to 4, wherein the at least one heat exchanger unit (3, 3', 3", 3''') comprises a heat exchanger (WT) in the form of a helical or meandering tube coil.

6. Storage apparatus according to Claim 5, wherein a spiral axis of the helical tube coil is oriented in a manner pointing in the direction of a longitudinal axis of the storage vessel (2) .

7. Storage apparatus according to one of Claims 1 to 6, wherein the at least one heat exchanger unit (3, 3', 3", 3''') comprises a heat exchanger (WT₁, WT₂, WT₃) in the form of a plate system with vertically and/or horizontally oriented plates (11).

8. Storage apparatus according to one of Claims 1 to 7, wherein a flow cross section for the passage of the at least one heat exchanger medium inside a heat exchanger unit (3, 3', 3", 3''') is greater, the further up the flow cross section is situated in the storage vessel (2).

9. Storage apparatus according to one of Claims 1 to 8, wherein a control and regulating unit (9) for controlling and/or regulating the shut-off devices (6, 6a, 6b, 6c, 6d, 6e, 6f) is also present.

10. Method for operating a storage apparatus (1) according to one of Claims 1 to 9, wherein a storage medium (4) is filled into the storage vessel (2) in a manner covering the at least one heat exchanger unit (3, 3', 3", 3''') and each of the second temperature sensors (8, 8ₛ₁, 8ₛ₂, 8ₛ₃), comprising the following steps of:
- providing a heat exchanger medium having a first temperature T1;
- capturing the first temperature T1 by means of at least one first temperature sensor (7a);
- capturing a second temperature T2 by means of each of the second temperature sensors (8, 8ₛ₁, 8ₛ₂, 8ₛ₃);
- selecting the second temperature sensor (s) (8, 8ₛ₁, 8ₛ₂, 8ₛ₃) at which an absolute value of a difference T1-T2 is minimal,
- introducing the heat exchanger medium into a segment (S1, S2, S3) assigned to the selected second temperature sensor (8, 8ₛ₁, 8ₛ₂, 8ₛ₃) on the basis of the same vertical position in the storage vessel (2);
- converting the heat exchanger medium into a different vertical position of the storage vessel (2), wherein thermal energy is transmitted between the heat exchanger medium and the storage medium (4), and
- discharging the heat exchanger medium from the storage vessel (2).

11. Method according to Claim 10, wherein, in order to transmit thermal energy to the storage medium (4), the heat exchanger medium is converted into a lower vertical position of the storage vessel (2) and, in order to transmit thermal energy to the heat exchanger medium, the heat exchanger medium is converted into a higher vertical position of the storage vessel (2).

12. Method according to Claim 10 or Claim 11, wherein water or an aqueous solution is filled into the storage vessel (2) as the storage medium (4).

13. Method according to Claim 10 or Claim 11, wherein an organic compound is filled into the storage vessel (2) as the storage medium (4).

14. Method according to one of Claims 10 to 13, wherein water vapour and/or water is used as the heat exchanger medium.

15. Use of a storage apparatus (1) according to one of Claims 1 to 9 to store thermal energy, which is removed from fluids coming from a paper production plant (100) using the fluids as the first heat exchanger medium (WTM, WTM1, WTM2, WTM3), and to return the stored thermal energy to the paper production plant (100) by means of a second heat exchanger medium (WTM', WTM4, WTM5, WTM6).

## Revendications

1. Installation (1) accumulatrice pour l'accumulation temporaire d'énergie calorifique, comprenant
- un récipient (2) accumulateur calorifugé de réception d'un fluide (4) accumulateur,
- au moins une unité (3, 3', 3", 3''') d'échangeur de chaleur, qui est disposée dans le récipient (2) accumulateur, en pouvant être parcourue au moyen d'au moins un fluide échangeur de chaleur, en segments (S, S1, S2, S3) et qui est conçue pour le transport du au moins un fluide échangeur de chaleur, en des positions en hauteur différentes du récipient (2) accumulateur,
- un certain nombre de conduits (5, 5', 5_{S1}, 5_{S2}, 5_{S3}) d'alimentation pour l'apport et/ou l'évacuation du au moins un fluide échangeur de chaleur, respectivement au moins un conduit (5_{S1}, 5_{S2}, 5_{S3}) d'alimentation communiquant avec l'un des segments (S, S1, S2, S3),
- un dispositif (6, 6a, 6b, 6c, 6d, 6e, 6f) d'arrêt par conduit (5_{S1}, 5_{S2}, 5_{S3}) d'alimentation communiquant avec un segment,
- au moins une première sonde (7a, 7b) de température pour relever une première température T1 du au moins un fluide échangeur de chaleur d'un côté loin du récipient (2) accumulateur du dispositif (6, 6a, 6b, 6c, 6d, 6e, 6f) respectif d'arrêt, et
- au moins une deuxième sonde (8, 8_{S1}, 8_{S2}, 8_{S3}) de température dans la région de chaque position en hauteur, dans laquelle se trouve un segment (S, S1, S2, S3) pour relever une deuxième température T2 locale du fluide (4) accumulateur ;
**caractérisée en ce que** l'installation accumulatrice comprend une unité (9) de commande et de régulation pour commander et/ou réguler le dispositif (6, 6a, 6b, 6c, 6d, 6e, 6f) d'arrêt,
dans laquelle l'unité de commande et de régulation relève les températures du fluide T1 échangeur de chaleur et, en fonction de la position en hauteur du fluide T2 accumulateur, pour effectuer une formation de différence et la position en hauteur ou les conduits d'alimentation associés d'entrée et de sortie du fluide échangeur de chaleur dans l'unité d'échangeur de chaleur ou hors de celle-ci peut être déterminée, les dispositifs (6, 6a, 6b, 6c, 6d, 6e, 6f) d'arrêt étant prévus comme ouverts pour entrer dans les conduits d'alimentation utilisés et en sortir, un maintien fermé et barré des autres conduits (5_{S1}, 5_{S2}, 5_{S3}) d'alimentation étant prévu.

2. Installation accumulatrice suivant la revendication 1, dans laquelle le récipient (2) accumulateur a un axe longitudinal vertical et dans lequel un centre de gravité de la au moins une unité (3, 3', 3", 3''') d'échangeur de chaleur est centrée par rapport à l'axe longitudinal dans le récipient (2) accumulateur.

3. Installation accumulatrice suivant la revendication 1 ou 2, dans laquelle la au moins une unité (3, 3', 3", 3''' ) d'échangeur de chaleur comprend, par segment (S, S1, S2, S3), un échangeur de chaleur (WT₁, WT₂, WT₃).

4. Installation accumulatrice suivant la revendication 3, dans laquelle les échangeurs de chaleur (WT₁, WT₂, WT₃) sont disposés en des positions en hauteur différentes du récipient (2) accumulateur et sont montés fluidiquement en série.

5. Installation accumulatrice suivant l'une des revendications 1 à 4, dans laquelle la au moins une unité (3, 3', 3", 3''') d'échangeur de chaleur comprend un échangeur de chaleur (WT) sous la forme d'un serpentin hélicoïdal ou sinueux.

6. Installation accumulatrice suivant la revendication 5, dans laquelle un axe du serpentin hélicoïdal est dirigé en pointant en direction d'un axe longitudinal du récipient (2) accumulateur.

7. Installation accumulatrice suivant l'une des revendications 1 à 6, dans laquelle la au moins une unité (3, 3', 3", 3''') d'échangeur de chaleur comprend un échangeur de chaleur (WT₁, WT₂, WT₃) sous la forme d'un système de plaque ayant des plaques (11) orientées verticalement et/ou horizontalement.

8. Installation accumulatrice suivant l'une des revendications 1 à 7, dans laquelle une section transversale d'écoulement de passage du au moins un fluide échangeur de chaleur au sein d'une unité (3, 3', 3", 3''') d'échangeur de chaleur est d'autant plus grande que la section transversale d'écoulement se trouve plus loin en haut dans le récipient (2) accumulateur.

9. Installation accumulatrice suivant l'une des revendications 1 à 8, dans laquelle il est prévu, en outre, une unité (9) de commande et de régulation pour commander et/ou réguler les dispositifs (6, 6a, 6b, 6c, 6d, 6e, 6f) d'arrêt.

10. Procédé pour faire fonctionner une installation (1) accumulatrice suivant l'une des revendications 1 à 9, dans lequel on remplit à recouvrement dans le récipient (2) accumulateur d'un fluide (4) accumulateur la au moins une unité (3, 3', 3", 3''') d'échangeur de chaleur et chacune des deuxièmes sondes (8, 8_{S1}, 8_{S2}, 8_{S3}) de température comprenant les stades suivants :
- on se procure un fluide échangeur de chaleur ayant une première température T1 ;
- on relève la première température T1 au moyen d'au moins une première sonde (7a) de température ;
- on relève une deuxième température T2 au moyen de l'une de chacune des deuxièmes sondes (8, 8_{S1}, 8_{S2}, 8_{S3}) de température ;
- on choisit la ou les deuxièmes sondes (8, 8_{S1}, 8_{S2}, 8_{S3}) de température où une valeur absolue d'une différence T1 - T2 est minimum,
- on envoie le fluide échangeur de chaleur dans un segment (S1, S2, S3) associé à la deuxième sonde (8, 8_{S1}, 8_{S2}, 8_{S3}) de température choisie en raison de la même position en hauteur dans le récipient (2) accumulateur ;
- on envoie le fluide échangeur de chaleur à une position en hauteur différente du récipient (2) accumulateur, de l'énergie calorifique étant transmise entre le fluide échangeur de chaleur et le fluide (4) accumulateur, et
- on évacue le fluide échangeur de chaleur du récipient (2) accumulateur.

11. Procédé suivant la revendication 10, dans lequel, pour le transfert d'énergie calorifique au fluide (4) accumulateur, on envoie le fluide échangeur de chaleur dans une position en hauteur plus basse du récipient (2) accumulateur et en ce que, pour le transfert d'énergie calorifique au fluide échangeur de chaleur, on envoie le fluide échangeur de chaleur dans une position en hauteur plus haute du récipient (2) accumulateur.

12. Procédé suivant la revendication 10 ou la revendication 11, dans lequel on remplit le récipient (2) accumulateur d'eau ou d'une solution aqueuse comme fluide (4) accumulateur.

13. Procédé suivant la revendication 10 ou la revendication 11, dans lequel on remplit le récipient (2) accumulateur d'un composé organique comme fluide (4) accumulateur.

14. Procédé suivant l'une des revendications 10 à 13, dans lequel on utilise de la vapeur d'eau et/ou de l'eau comme fluide échangeur de chaleur.

15. Utilisation d'une installation (1) accumulatrice suivant l'une des revendications 1 à 9 pour accumuler de l'énergie calorifique, qui prélève des fluides provenant d'une installation (100) de fabrication du papier en utilisant les fluides comme premier fluide (WTM, WTM1, WTM2, WTM3) échangeur de chaleur et pour retourner l'énergie calorifique accumulée à l'installation (100) de fabrication du papier au moyen d'un deuxième fluide (WTM, WTM4, WTM5, WTM6) échangeur de chaleur.
